Europäisches Patentamt

European Patent Office

Office européen des brevets

(11) Numéro de publication : **0 113 624**
**B1**

(12)    **FASCICULE DE BREVET EUROPÉEN**

(45) Date de publication du fascicule du brevet :
30.07.86

(51) Int. Cl.⁴ : **F 16 L 33/02**

(21) Numéro de dépôt : **83402435.8**

(22) Date de dépôt : **15.12.83**

(54) **Collier de serrage.**

(30) Priorité : **13.01.83 FR 8300441**

(43) Date de publication de la demande :
**18.07.84 Bulletin 84/29**

(45) Mention de la délivrance du brevet :
**30.07.86 Bulletin 86/31**

(84) Etats contractants désignés :
**BE DE GB IT NL**

(56) Documents cités :
**CH-A-    102 595**
**FR-A- 2 314 384**
**FR-A- 2 375 536**
**US-A- 1 746 033**
**US-A- 3 748 697**

(73) Titulaire : **ETABLISSEMENTS CAILLAU**
**4, rue Béranger**
**F-92100 Boulogne-Billancourt (FR)**

(72) Inventeur : **Calmettes, Lionel**
**3, rue des Glycines**
**F-77330 Ozoir-la-Ferriere (FR)**

(74) Mandataire : **Descourtieux, Philippe et al**
**CABINET BEAU de LOMENIE 55 rue d'Amsterdam**
**F-75008 Paris (FR)**

## Description

On connaît, notamment par le brevet FR-A-2 428 163, un collier de serrage constitué par une bande métallique enroulée sur elle-même, dont les deux extrémités sont pourvues de moyens d'accrochage complémentaires, tels que des dents convenablement orientées. On s'est toutefois rendu compte que le maintien en prise des moyens d'accrochage nécessite, outre une agrafe empêchant tout éloignement accidentel des deux extrémités de la bande, une conformation très précise de ces moyens d'accrochage. C'est ainsi par exemple que certaines dents doivent présenter une forme rentrante dont la réalisation comporte quelquefois des problèmes difficiles à résoudre, en particulier si une pression importante est exercée par la bande sur l'objet à serrer, nécessitant une traction élevée sur les deux extrémités du collier.

L'invention a donc pour objet un collier de serrage d'un type analogue à celui décrit dans le brevet précité, mais dont la réalisation est plus facile et, par conséquent, moins coûteuse, en particulier en ce qui concerne les moyens d'accrochage des deux extrémités de la bande. On soulignera cependant que les moyens d'accrochage qui vont être décrits ci-après peuvent être utilisés sur de nombreux types de colliers de serrage, quels que soient les dispositions prises pour la mise en place et le serrage de ces colliers sur les objets à serrer.

Le collier selon l'invention comporte une première extrémité présentant sur sa face extérieure une zone allongée munie de stries ou dents s'étendant transversalement, la largeur de ladite zone étant de préférence inférieure à celle de la bande. Une agrafe est liée à la deuxième extrémité de la bande et est enroulée transversalement sur elle-même du côté extérieur de la bande pour constituer un passage pour la première extrémité de la bande.

Conformément à l'invention, les deux brins terminaux de l'agrafe se recouvrent l'un l'autre du côté extérieur de la bande et sont assemblés par un anneau en tôle pliée dont la face en regard de la bande présente des stries ou dents s'étendant transversalement à la bande et destinées à coopérer avec les stries ou dents de la première extrémité de la bande.

L'invention sera mieux comprise et diverses caractéristiques secondaires ainsi que ses avantages apparaîtront au cours de la description qui va suivre d'un mode de réalisation avantageux, donné uniquement à titre d'exemple. A cet effet, on se référera aux dessins annexés dans lesquels :

la figure 1 est une vue en plan d'une bande métallique préparée en vue de constituer un collier selon l'invention ;

la figure 2 est une vue partielle en perspective d'un collier selon l'invention prêt à être utilisé ;

la figure 3 est une vue à plus grande échelle d'un détail de la figure 2, dans la zone de coopération des moyens d'accrochage des deux extrémités de la bande, avec arrachement partiel de l'agrafe ;

la figure 4 est une coupe selon IV-IV de la figure 3 ;

les figures 5 et 6 sont des vues analogues aux figures 3 et 4 d'une variante de réalisation.

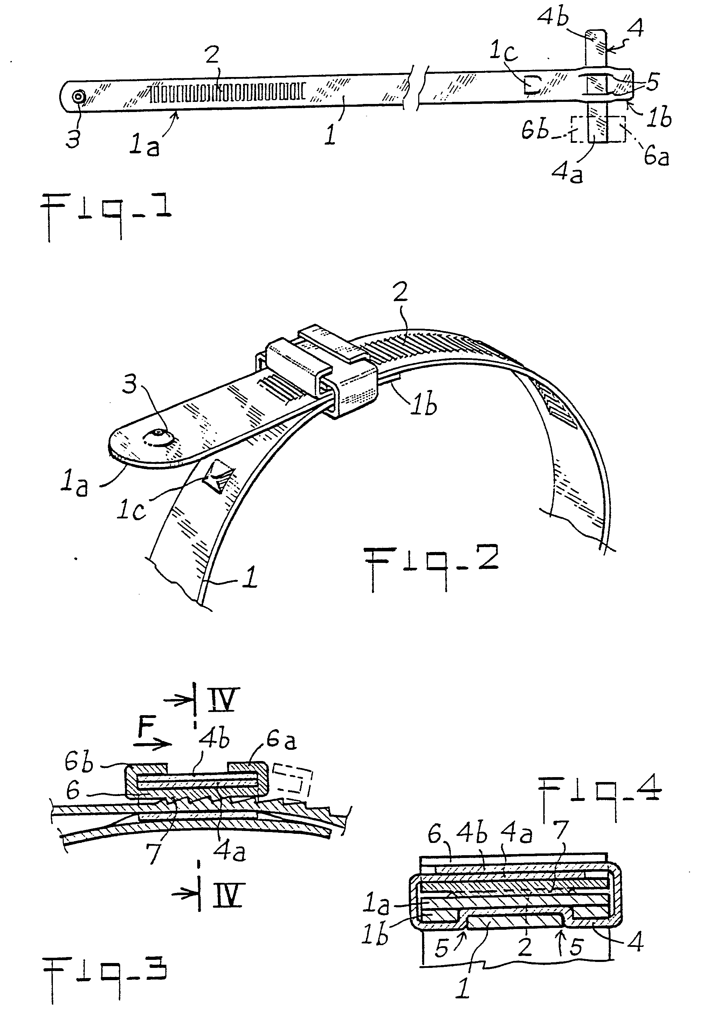

Si l'on se reporte au dessin, on voit que le collier est constitué essentiellement par une bande métallique 1 de largeur uniforme. Sa première extrémité 1a est pourvue d'une zone allongée de stries transversales 2, obtenues par exemple par emboutissage. De préférence, les stries 2 ont une longueur inférieure à la largeur de la bande 1, ce qui évite leur déformation lorsqu'on exerce une traction sur la bande. La striure 2 présente une forme de dents dont les reliefs font saillie d'un côté seulement de la bande, qui constituera la face extérieure du collier. C'est ce côté qui est visible sur la figure 1.

De préférence, la première extrémité 1a comporte encore un relief 3 constituant l'un des moyens de préhension de ladite extrémité en vue du serrage du collier. Le rôle et les avantages de ce moyen de préhension ont été décrits dans le brevet français précité. On notera cependant que tout autre moyen de préhension pourrait être utilisé dans le cadre de la présente invention.

Sur la deuxième extrémité 1b de la bande est fixée une agrafe 4. Avant sa conformation, l'agrafe 4 est disposée, comme on le voit sur la figure 1, perpendiculairement à la bande 1.

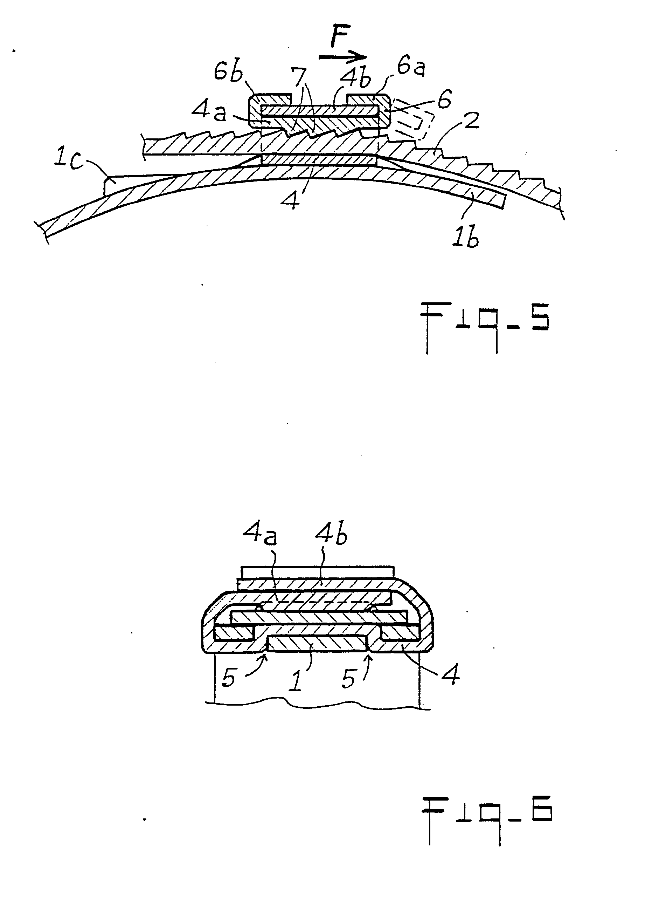

De préférence, l'agrafe 4 traverse deux fentes 5 pratiquées longitudinalement dans la bande, mais elle pourrait être liée à cette dernière par tout autre moyen convenable, par exemple par soudure. Ainsi qu'on le voit sur la figure 1, et mieux encore sur la figure 4, la partie centrale de la bande entre les fentes 5 est maintenue dans le prolongement de la surface de la bande, tandis que seuls les bords latéraux sont légèrement soulevés pour faciliter le passage de l'agrafe. Ainsi, malgré la mise en place de l'agrafe, la continuité de la face intérieure du collier est rétablie sur toute sa largeur.

On indiquera encore qu'un bossage 1c est avantageusement prévu dans la bande au voisinage de l'agrafe 4, ce bossage constituant un deuxième moyen de préhension utilisé au cours du serrage du collier, comme on l'a déjà expliqué dans le brevet français précité.

La bande 1 est alors enroulée sur elle-même de façon que le début de la zone striée 2 vienne à peu près au-dessus de l'agrafe 4 (figure 2 et figure 3).

Une petite plaque de tôle 6 est posée sur la zone striée 2, sa largeur étant voisine de celle de la bande 1, de préférence légèrement inférieure à celle-ci. Comme on le voit bien sur la figure 3, la face inférieure de la plaque 6 située en regard de la zone 2 présente des stries ou dents 7 s'étendant transversalement à la bande 1. La longueur de ces stries 7 est voisine de celle des striures de la zone 2 et surtout leur forme est complémentaire de celle des stries ou dents de la zone 2. De préférence, comme on le voit sur la figure 3, la pente des stries de la zone 2 sera plus faible du côté de l'extrémité de la bande et plus raide de l'autre côté, mais des pentes égales, même faibles, pourraient parfaitement convenir.

Les deux brins terminaux 4a et 4b de l'agrafe 4 sont ensuite enroulés autour des deux extrémités 1a et 1b de la bande en emprisonnant la plaque 6. Ces deux brins 4a et 4b se recouvrent alors l'un l'autre du côté extérieur du collier (figure 4). L'agrafe 4 est enfin verrouillée par le pliage des deux extrémités 6a et 6b de la tôle 6 qui constitue ainsi un anneau de maintien des deux brins 4a et 4b, cet anneau étant ainsi lui-même fermement lié à l'agrafe 4 (figure 3).

Si l'on se reporte maintenant aux figures 5 et 6, on voit une variante très avantageuse de la réalisation de l'anneau de maintien des brins terminaux 4a et 4b de l'agrafe. L'anneau fait en effet partie intégrante de l'agrafe 4 et plus particulièrement de son brin terminal 4a. Ses deux extrémités 6a et 6b (visibles en trait ponctué sur la figure 1) constituent des excroissances latérales de l'agrafe 4 et peuvent être découpées en même temps qu'elle dans une tôle. La partie centrale de l'agrafe 4a située entre les deux excroissances 6a et 6b reçoit, par exemple par emboutissage, les stries 7.

Le montage du collier s'effectue d'une façon analogue à celle qui a été décrite plus haut. Le brin 4b recouvre obligatoirement le brin 4a et les excroissances 6a, 6b que comporte ce dernier sont repliées au-dessus du brin 4b pour constituer l'anneau de maintien de l'ensemble de l'agrafe 4, cet anneau étant donc, là encore, fermement lié à l'agrafe 4 (figure 5).

Toutes les opérations qui viennent d'être décrites peuvent être rendues automatiques dans le cadre d'une fabrication en grande série et aboutissent à la réalisation d'un collier de serrage prêt à être utilisé.

En effet, après avoir enfilé le collier sur l'objet à serrer, il convient d'exercer une traction sur l'extrémité 1a en prenant appui sur l'extrémité 1b. Dans ce but, on pourra utiliser l'outil décrit dans le brevet FR-A-2 485 425 qui prend appui sur les deux moyens de préhension 1c et 3. Toutefois, tout autre outil, manuel ou automatique, conviendra, à condition que des moyens de préhension aient été prévus pour coopérer avec lui.

En particulier, un outil pourra avantageusement prendre appui sur l'anneau 6 qui est solidaire de l'extrémité 1b tout en exerçant la traction nécessaire sur l'extrémité 1a par l'intermédiaire du relief 3 ou de tout autre organe analogue. Cette façon de procéder présente en outre un avantage sur lequel on reviendra plus loin.

De toute façon, lorsqu'on exerce une traction sur l'extrémité 1a, celle-ci se déplace dans le passage qui lui est ménagé par l'agrafe 4. Les stries de la zone 2 franchissent les stries 7 de l'anneau 6 jusqu'au moment où l'opérateur estime que le collier est suffisamment serré. Ce sera le cas, dans l'exemple décrit, lorsque le relief 3 sera arraché par l'outil dans les conditions exposées par les brevets précités.

Après la fin de l'opération de serrage, les stries de la zone 2 coopérant avec celles de l'anneau 6 solidaire de l'agrafe 4 ont tendance à entraîner cette dernière dans le sens de la flèche F (figure 3 et figure 5). Une légère déformation de l'agrafe 4 se produit alors tendant à faire pénétrer de plus en plus profondément les stries 7 dans celles de la zone 2. (Avec une certaine exagération, on a représenté en trait ponctué sur la figure 3 et sur la figure 5 la déformation de l'agrafe 4 et de son anneau 6). Plus l'effort de traction dans le sens de la flèche F sera grand, plus intense sera le blocage des deux extrémités du collier l'une par rapport à l'autre.

On notera ici que, si l'outil permettant de serrer le collier prend appui sur l'anneau 6, il peut déjà à ce moment provoquer la déformation de l'agrafe 4, favorisant ainsi la coopération des stries 7 et de celles de la zone 2.

De toute façon, grâce à la structure du collier selon l'invention, et surtout à la possibilité d'une légère déformation de son agrafe 4 après le serrage, la forme des dents ou stries ne constitue plus un élément critique et leur fabrication n'exige plus les précautions qu'il convenait de prendre antérieurement. On peut même dire qu'il suffit que la zone 2 et l'anneau 6 présentent des rugosités complémentaires, aptes à engendrer une augmentation importante du frottement entre les deux extrémités 1a et 1b de la bande dès qu'elles sont pressées l'une contre l'autre par la déformation de l'agrafe 4.

On soulignera enfin quelques avantages supplémentaires du collier selon l'invention. Tout d'abord, ainsi qu'on s'en rend compte sur la figure 2, la surface intérieure du collier est parfaitement lisse, notamment en raison du fait que les reliefs de la zone 2 sont situés sur la surface extérieure. Ainsi, au cours du serrage, ces reliefs ne risquent plus d'entrer en prise avec le matériau souple constituant l'objet à serrer. La force de traction de l'outil est ainsi utilisée pour obtenir un serrage uniforme sur toute la périphérie de l'objet à serrer.

D'autre part, les reliefs constituant les stries ou dents de la zone 2 ou de l'anneau 6 peuvent être de faible hauteur. Il en résulte qu'au cours du serrage les efforts à exercer par l'outil pour provoquer le franchissement des stries les unes par les autres resteront modérés. Ainsi, on a pu mesurer qu'avec un outil de capacité de traction déterminée, on obtient une augmentation d'environ 40 % de la pression du collier sur l'objet à serrer.

## Revendications

1. Collier de serrage constitué par une bande de métal (1) enroulée sur elle-même, dont une première extrémité (1a) présente sur sa face extérieure une zone allongée (2) munie de stries ou dents s'étendant transversalement, la largeur de ladite zone étant de préférence inférieure à celle de la bande, et dont la deuxième extrémité (1b) est munie d'une agrafe (4) liée à la bande (1) et enroulée transversalement sur elle-même du côté extérieur de la bande (1) pour ménager un passage pour la première extrémité (1a) de la bande, caractérisé en ce que les deux brins terminaux (4a) et (4b) de l'agrafe (4) se recouvrent l'un l'autre du côté extérieur de la bande (1) et sont assemblés par un anneau (6) en tôle pliée dont la face en regard de la bande présente des stries (7) ou dents, s'étendant transversalement à la bande et destinées à coopérer avec les stries ou dents de la première extrémité (1a) de la bande.

2. Collier de serrage selon la revendication 1, caractérisé en ce que l'anneau (6) fait partie intégrante de l'un des brins terminaux (4a) de l'agrafe et ses extrémités (6a) et (6b) sont constituées par deux excroissances latérales entre lesquelles se trouvent les stries (7) de l'anneau.

## Claims

1. Hose clamp constituted by a metal wound-up strap (1), of which a first end (1a) has over its external face an elongated area (2) provided with ridges or teeth extending transversely, the width of said area being preferably less than that of the strap, and of which the second end (1b) is provided with a fastener (4) joined to the strap (1) and transversely wound on the external side of the strap (1) to provide a passage for the first end (1a) of the strap, characterized in that the two end portions (4a) and (4b) of the fastener (4) overlap on the external side of the strap (1), and are assembled by a ring (6) in bent over metal plate, of which the face opposite the strap has ridges (7) or teeth, extending transversely to the strap and designed to cooperate with the ridges or teeth of the first end (1a) of the strap.

2. Hose clamp according to claim 1, characterized in that the ring (6) is an integral part of one of the end portions (4a) of the fastener and its ends (6a) and (6b) are constituted by two lateral protuberances between which are situated the ridges (7) of the ring.

## Patentansprüche

1. Schlauchbinder aus einem auf sich gewickelten Metallband (1), dessen erstes Ende (1a) auf seiner Außenseite eine langgestreckte Zone (2) mit sich in Querrichtung erstreckenden Rillen oder Zähnen versehen ist, wobei die Breite dieser Zähne vorzugsweise kleiner als diejenige des Bandes ist, und dessen zweites Ende (1b) mit einer Klammer (4) versehen ist, die mit dem Band (1) verbunden und auf der Außenseite des Bands (1) in Querrichtung auf sich gewickelt ist, um für das erste Ende (1a) des Bands einen Durchtritt zu bilden, dadurch gekennzeichnet, daß sich die beiden Endabschnitte (4a) und (4b) der Klammer (4) außerhalb des Bands (1) einander überdecken und durch einen Ring (6) aus gefaltetem Blech zusammengebaut sind, dessen dem Band zugewendete Seite Rillen (7) oder Zähne aufweist, die sich quer zum Band erstrecken und mit Rillen oder Zähnen des ersten Endes (1a) des Bands zusammenarbeiten sollen.

2. Schlauchbinder nach Anspruch 1, dadurch gekennzeichnet, daß der Ring (6) integrierender Bestandteil eines der Endabschnitte (4a) der Klammer ist und seine Enden (6a) und (6b) durch zwei seitliche Vorsprünge gebildet sind, zwischen denen sich die Rillen (7) des Rings befinden.

0 113 624

Fig-1

Fig-2

Fig-3

Fig-4

1

Fig-5

Fig-6

2